Europäisches Patentamt

European Patent Office

Office européen des brevets

(11) Publication number: **0 196 844 B1**

# EUROPEAN PATENT SPECIFICATION

(45) Date of publication of patent specification: **16.09.92**   (51) Int. Cl.⁵: **C09J 133/06**, C08L 33/06

(21) Application number: **86302125.9**

(22) Date of filing: **21.03.86**

The file contains technical information submitted
after the application was filed and not included in
this specification

(54) **Tackifiers and their use in pressure sensitive adhesives.**

(30) Priority: **25.03.85 GB 8507679**

(43) Date of publication of application:
**08.10.86 Bulletin 86/41**

(45) Publication of the grant of the patent:
**16.09.92 Bulletin 92/38**

(84) Designated Contracting States:
**AT BE CH DE FR GB IT LI LU NL SE**

(56) References cited:
**EP-A- 0 085 471      EP-A- 0 159 821**
**DE-A- 1 569 888      DE-A- 2 523 617**
**DE-A- 2 553 955      FR-A- 2 231 727**

(73) Proprietor: **EXXON CHEMICAL PATENTS INC.**
**200 Park Avenue**
**Florham Park New Jersey 07932(US)**

(72) Inventor: **Jacob, Lutz Erich**
**Bosweg 76**
**B-1970 Wezembeek-Oppem(BE)**
Inventor: **Wouters, Guy**
**Avenue van Becelaere 28A BT 12**
**Brussels 1170(BE)**

(74) Representative: **Bawden, Peter Charles et al**
**Esso Chemical Research Centre PO Box 1**
**Abingdon Oxfordshire OX13 6BB(GB)**

EP 0 196 844 B1

**Description**

The present invention relates to pressure sensitive adhesives comprising an acrylic latex and a tackifier resin.

Pressure sensitive adhesives are, among other applications, used in the tape and label field. A pressure sensitive adhesive may be used in a number of applications such as masking tape, electrical tape and medicinal tapes for holding dressings and the like in place. The term label covers a broad range of products and includes items such as price tags in the supermarket and labels on glass or plastic containers. In the case of "labels" two types of bonding are required namely permanent and removable. Permanent bonding is required for items such as labels on glass or plastic containers when the life of the label will be relatively long. Removable bonding is desirable for items such as price tags and peelable tape.

Pressure sensitive adhesives should have a high initial tack so that the adhesive surface merely needs to be contacted and pressed to a substrate to achieve bonding. There should be little or no requirement to hold the adhesive and substrate in position for any significant time while a bond develops. Depending upon the strength of adhesion required the bonding force of the adhesive may increase with time to provide a relatively permanent bond.

It is known to prepare at least three different types of adhesives using natural or synthetic tackifiers, natural or synthetic resins, or blends thereof, namely, hot melt adhesives, solution adhesives and aqueous based adhesives. Hot melt adhesives are made from a blend of resins and are normally solid at room temperature. Hot melt adhesives require an elevated temperature for application to a substrate necessitating some type of hot melt gun.

Solution adhesives such as those described in United States Patents 4037016, 4048124 and 4248748 do not suffer from the same drawback since the adhesives comprise a solution of a tackifier resin or a blend of tackifier resins in a low boiling hydrocarbon solvent. When the adhesive is applied to a substrate the solvent evaporates. Due to environmental concerns and the rising cost of hydrocarbon solvent there has been an increasing need to reduce or eliminate the hydrocarbon solvent in such adhesives. Accordingly, the adhesives industry is seeking improved aqueous based adhesive compositions. Existing aqueous based adhesive compositions usually comprise a natural or a synthetic latex in admixture with cellulose materials such as starch or natural or synthetic tackifier resins.

United States Patent 4,189,419 to Avery International discloses a pressure sensitive adhesive comprising from about 50 to 60% by weight on a dry basis of a tackifier and from about 50 to 40% by weight on a dry basis of a carboxylated styrene butadiene polymer (SBR).

A paper entitled "Styrene Butadiene Latexes for Adhesive Applications" by Robert G. Kahn of Dow Chemical, published in Adhesives Age, December of 1977 discloses a similar pressure sensitive adhesive composition which also contains butyl benzyl phthalate, as a "plasticizer". While the amount of plasticizer is relatively small the plasticizer comprises a hydrocarbon phase in the adhesive and the composition is not entirely aqueous based.

United States Patent 4,179,415 issued December 18, 1979, to Johnson and Johnson discloses a substantially aqueous based adhesive composition containing a latex having a high proportion of isoprene.

United Kingdom patent application 2097410A discloses novel pressure sensitive ahesives comprising a latex of a polymer and a tackifier resin the polymer being obtained from particular amounts of vinyl or vinylidene aromatic monomers and $C_4$-$C_8$ conjugated diene monomers and an unsaturated carboxylic acid. Similarly European patent application publication number 0062343 A2 discloses a latex of a copolymer obtained from a hard monomer such as styrene, a soft monomer such as butadiene and an unsaturated acid which may be blended with a tackifying resin to produce a formulation useful as a pressure sensitive adhesive.

Various resinous materials have been suggested as tackifiers for these latices. Examples of materials suggested include emulsified rosin, partially decarboxylated rosin, glyceryl esters of polymerised rosin, partially dimerised rosin, natural resins, hydrogenated wood rosin, plasticised hydrogenated rosin, aliphatic hydrocarbon resins from petroleum, aromatic petroleum resins, EVA, terpene/phenol resins, cumarone/indene resins, rosin esters, pentaerythritol esters and polydicylopentadiene resins.

In developing adhesive formulations one seeks the optimum combination of several adhesive properties and since it is not generally possible to achieve the optimum for every property it is necessary to obtain the best balance of properties for the particular use in mind. For pressure sensitive adhesives for use in the label industry one tries to optimise the loop tack and ball tack and at the same time provide an adhesive whose component will not migrate during storage leading to unsightly colouring and lowering of adhesive properties. Although the improved loop tack and ball tack can be provided by the tackifier resins of the type described above we have found that those tackifiers which provide such tack for example hydrogenated rosins such as Staybelite ester 10 and modified rosins such as Snowtack 52CF tend to migrate.

It has been generally suggested in United Kingdom Patent 2097410A and European Patent 0062343 that petroleum hydrocarbon resins such as those manufactured from a $C_9$ cut of an aromatic hydrocarbon stream or a $C_5$ cut of an aliphatic or cycloaliphatic hydrocarbon stream are useful as tackifiers. There is however no suggestion of the particular type of resin that should be used and indeed many of the resins falling within such broad descriptions are unsuitable for tackification of lattices.

EP-A-0 159 821 describes lattices of resins having a softening point from 10°C to 80°C which are copolymers of a feed which is predominantly $C_5$ olefines and diolefines and one or more monovinyl aromatic compounds which contain from 10 to 33 wt.% of the monovinyl aromatic compound and their use as tackifiers for for carboxylated styrene butadiene copolymer rubbers. We have now found that this type of copolymer is useful to tackify the polyacrylate emulsions frequently used in aqueous based adhesives.

The present invention therefore provides the use as a tackifier for an aqueous latex of acrylic polymers or copolymers of an aqueous emulsion of a resin having a softening point from 10°C to 120°C preferably 10 to 80°C being a copolymer of a feed which is predominantly $C_5$ olefines and diolefines and one or more monovinyl aromatic compounds containing from 10 to 60 wt.% preferably 10 to 30 wt.% of the monovinyl aromatic compounds.

The invention further provides a pressure sensitive adhesive prepared by blending an aqueous latex of from 30% to 85% by weight of an acrylic polymer or copolymer and an aqueous emulsion of from 15% to 70% by weight of a resin having a softening point from 10°C to 120°C pereferably 10°C to 80°C being a copolymer of a feed which is predominantly $C_5$ olefines and diolefines and one or more monovinyl aromatic compounds containing from 10 to 60 wt.% preferably 10 to 30 wt.% of the monovinyl aromatic compounds.

The resins used as tackifier according to the present invention are prepared by the polymerisation of a mixture of a petroleum cracked distillate generally boiling in the range 25°C to 80°C and a monovinyl aromatic monomer in the proportions to yield a resin containing from 10 to 60 wt.% preferably 10 to 40 wt.% more preferably 10 to 30 wt.% of the monovinyl aromatic compound as determined by Nuclear Magnetic Resonance analysis. The petroleum cracked distillate comprises a mixture of saturated and unsaturated monomers the unsaturated monomers being mono-olefines and diolefines and although the unsaturated materials are predominantly $C_5$ some higher and lower materials such as $C_6$ olefines and diolefines may be present. The distillate may also contain saturated hydrocarbons including aromatics which can act as polymerisation solvent.

The preferred monovinyl aromatic monomer is styrene which may be substituted in the aromatic group. Alternatively $\alpha$,methyl styrene or vinyl toluene may be used. It is preferred to use the pure monomer rather than the commercially available mixtures of vinyl aromatic monomers.

The resins are conveniently prepared by Friedel-Crafts catalysed polymerisation in which the mixture of cracked distillate and monovinyl aromatic monomer are treated with 0.25-2.5 wt.% of a catalyst such as aluminium chloride, aluminium bromide, or solutions, slurries or complexes thereof or borontrifluoride. These reactions are generally carried out at temperatures in the range 0 to 120°C, preferably 0 to 70°C more preferably 20° to 55°C the conditions being controlled to yield a resin of the required softening point. Residual catalyst is quenched by suitable methods such as addition of methyl alcohol and subsequent filtration followed by water and/or caustic washing. The final solution may then be stripped of unreacted hydrocarbons and low molecular weight oils by vacuum or steam distillation.

The resins contain from 10 to 60, preferably 10 to 40 more preferably 10 to 30 wt.% of the monovinyl aromatic monomer, most preferably from 15 to 25 wt.% and have a softening point from 10°C to 120°C, preferably 10°C to 80°C. The optimum softening point depends on the nature of the acrylic polymer or copolymer latex with which it is to be used but we prefer it be in the range 30°C to 95°C since at higher softening points the adhesive properties can deteriorate whilst use of lower softening point materials can result in migration of the tackifier. The resins are conveniently supplied as aqueous emulsions and the emulsions may readily be produced by mixing with water and an anionic or nonionic emulsifer or a mixture of both and obtaining the emulsion by inversion. We prefer that the emulsion contain about 50 wt.% of the resin. The emulsions may conveniently be obtained by the process described in EP-A-0085471.

The acrylic polymer generally in the form of a latex and the tackifier may be blended using conventional blenders to provide a homogenous mixture. The tackifier resin may be added to the latex in an amount of from 20 to 100 parts by weight per hundred parts of polymer in the latex, more, preferably the tackifier resin is added to the latex in an amount from 50 to 150 parts by weight per 100 parts of polymer in the latex. It is preferred that the tackifier be added to the latex as an aqueous emulsion to provide the amounts of tackifier resin per amount of polymer given above. The acrylic polymer may be any of those traditionally used in the adhesives industry such as the "Acronal" (Registered Trade Mark) products marketed by BASF.

The adhesive compositions of the present invention may be applied to a substrate and then dried using conventional substrates and procedures. The substrate used depends upon the use envisaged but it is usually relatively thin material, usually no greater than about 3.2 mm in thickness and in the manufacture of tapes and labels the substrate is generally in sheet form. The sheet may be a polymeric material which is flexible at room temperature and may be a homo-polymer of an ethylenically unsaturated monomer such as ethylene, propylene or vinyl chloride, or be polyester or polyamide provided it has sufficient flexibility for the desired end use. Alternatively the substrate may be made from cellulosic or reconstituted cellulosic material such as rayon. The substrate need not be a sheet material but may be composed of fibers which may be woven, or non woven as in paper. Woven substrates may be made from cellulosic material, such as cotton or from fibers of any of the above mentioned polymers.

The composition is applied to the substrate using conventional coating techniques such as roller coaters, blade coaters, meyer rods or air coaters. The coated substrate is then dried usually by passing it through a heating tunnel or oven through which may be circulating hot air or the tunnel or oven may contain infrared lamps to dry the coated substrate. The drying time will be a function of a number of factors such as the heat capacity of the substrate, the type of heating, the oven temperature, air velocities (if circulating air is used) and the rate of passage of the substrate through the heater.

The substrate should be coated with sufficient composition to provide a dry coat weight from about 16 to about 57 $g/cm^2$. Generally in the manufacture of tapes using a continuous sheet polymeric substrate a dry coat weight of about 15-30 $g/m^2$ is used. In the manufacture of labels a dry coat weight from about 15 to 30 $g/cm^2$ is usually used. In the manufacture of masking tape a dry coat weight from about 35 to about 65 $g/cm^2$ is usually used.

After drying the coated substrate is cut to the required dimension. In the manufacture of tape the substrate is cut into strips and rolled to provide a finished product. The substrate may also be cut into shaped items to provide labels or medicinal tapes.

The invention is illustrated by the following Examples in which the feed used to produce the resin tackifier had the following composition.

| Component (Wt.%) | |
|---|---|
| $C_5$ paraffin | 1 |
| $C_5$ olefins | 28.9 |
| $C_6$ paraffins | 3 |
| $C_6$ olefins | 5 |
| Isoprene | 17 |
| Pentadienes | 14.1 |
| CPD | 2.2 |
| Aromatics | 30 |

This feed was copolymerised with varying amounts of a $C_5$ olefin stream and styrene using 0.85 wt.% of an aluminium trichloride catalyst at a temperature of 40°C. The feed and catalyst were added to the reactor over 45 minutes and left for a further 15 minutes, after polymerisation the materials were hydrolysed, then neutralised with ammonium hydroxide, and stripped to remove volatiles.

The $C_5$ olefin stream used had the following compositions

| | |
|---|---|
| 3-Me-butene-1 | 0.3 |
| Pentadiene 1.4 | 0.1 |
| i-Pentane | 0.7 |
| Pentene-1 | 1.6 |
| 2-Me-butene-1 | 3.7 |
| Isoprene | 0.3 |
| N-pentane | 4.7 |
| Pentene-2 trans | 15.4 |
| Pentene-2 cis | 5.4 |
| 2-Me-butene-2 | 15.7 |
| Pentadiene-1.3 tris & trans | 0.3 |
| CPD | 1.0 |
| Cyclopentene | 12.2 |
| Cyclopentane | 11.9 |
| Aromatics | 4.0 |

The properties of the feeds used and the properties of the resins obtained are shown in the following Table.

| Resin | 1 | 2 | 3 | 4 | 5 | 6 | 7 |
|---|---|---|---|---|---|---|---|
| **Feed Composition** | | | | | | | |
| Styrene: (wt.%) | 8.6 | 8.6 | 14.3 | 20 | 27.3 | 18.2 | 33 |
| $\alpha$-Me-styrene (wt.%) | - | - | - | - | - | 9.1 | - |
| Feed | 30.4 | 30.4 | 28.6 | 26.7 | 24.2 | 24.2 | 22.2 |
| C$_5$ stream (wt.%) | 61 | 61 | 57.1 | 53.3 | 48.5 | 48.5 | 44.8 |
| Resin yield (%) | 38 | 30 | 39 | 45 | 55 | 54 | 62 |
| Softening point (°C) | 33 | 50 | 31 | 38 | 40 | 30 | 40 |
| Styrene in resin (% wt.) | 20 | 20 | 30 | 40 | 43 | 45 | 50 |

Example 2 was stripped using steam

The resins were emulsified in an equal weight of water by the process of EP-A-35471 using 5.5 parts of the commercially available emulsifier Atlox 3404FB and their properties as tackifiers for polyacrylate emulsions commercially available for water based pressure sensitive adhesives were determined by mixing the resin emulsion and the latices commercially available from BASF as ACRONAL 80 D and ACRONAL 85D and ACRONAL V205 (Acronal is a Registered Trade Mark) to give a mixture combining equal amounts of resins and polyacrylates on a dry basis. The mixture was coated onto Mylar film to give a covering of 25 grams/square metre and the 180° peel strength, loop tack on metal and glass and the ball tack were measured as well as the shear on metal and the results compared with systems containing the commercially available tackifier the modified resin known as Snowtack (RTM) 52 CF.

The results obtained with Acronal 80D were as follows:

| RESIN | 1 | 2 | 3 | 4 | 5 | 6 | 7 | Snow Tack 52CF |
|---|---|---|---|---|---|---|---|---|
| Peel Strength (Newtons per 25.4 mm) | 9.9 | 10.9 | 10.7 | 11.6 | 8.9 | 10.1 | 9.5 | 12.5 |
| Loop tack (Newtons per 25.4 mm) | 8.2 | 8.8 | 8.8 | 10.3 | 7.5 | 6.5 | 8 | 9.3 |
| Shear (Hours) | 10.5 | 10 | 7.5 | 9.7 | 18.7 | 6 | 8.7 | 7.5 |

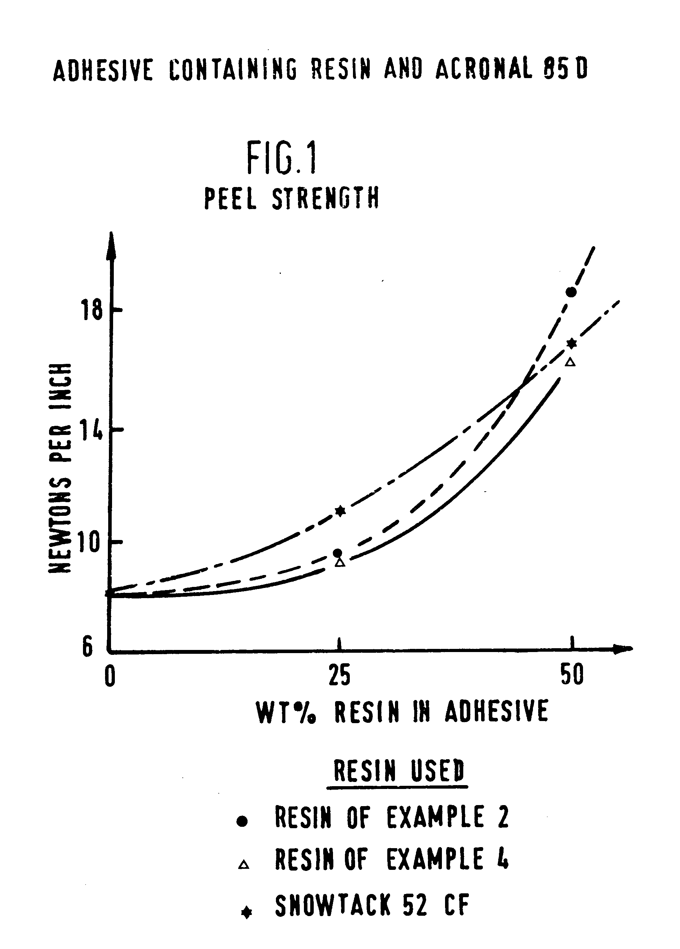

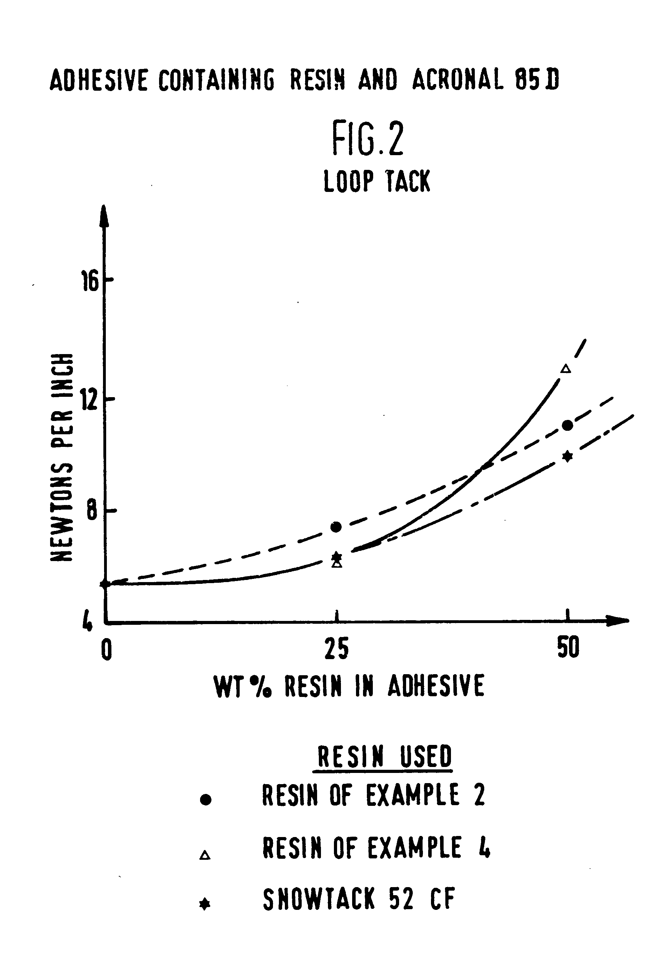

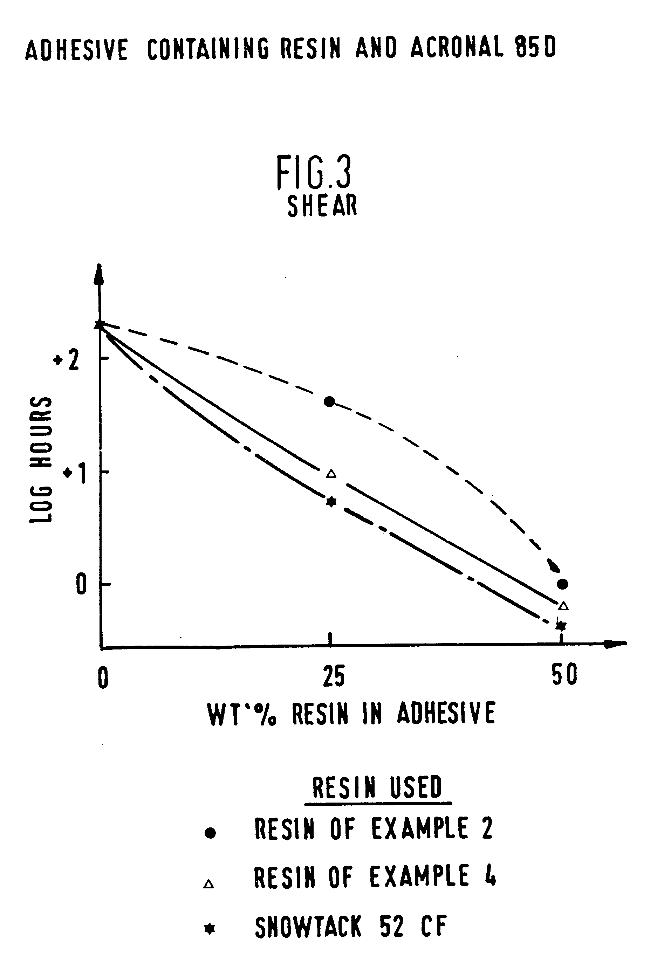

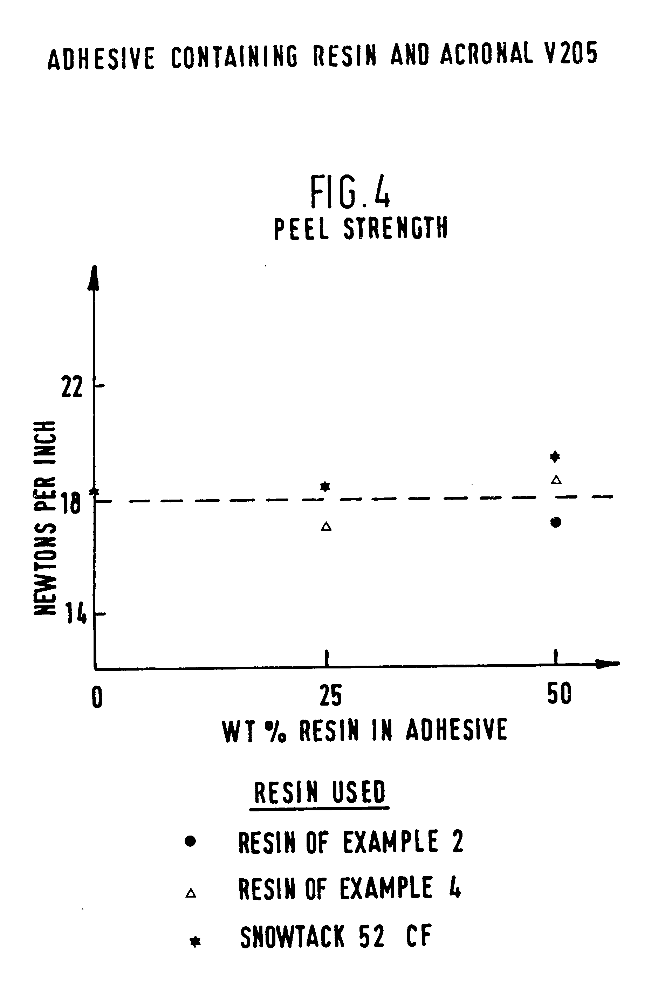

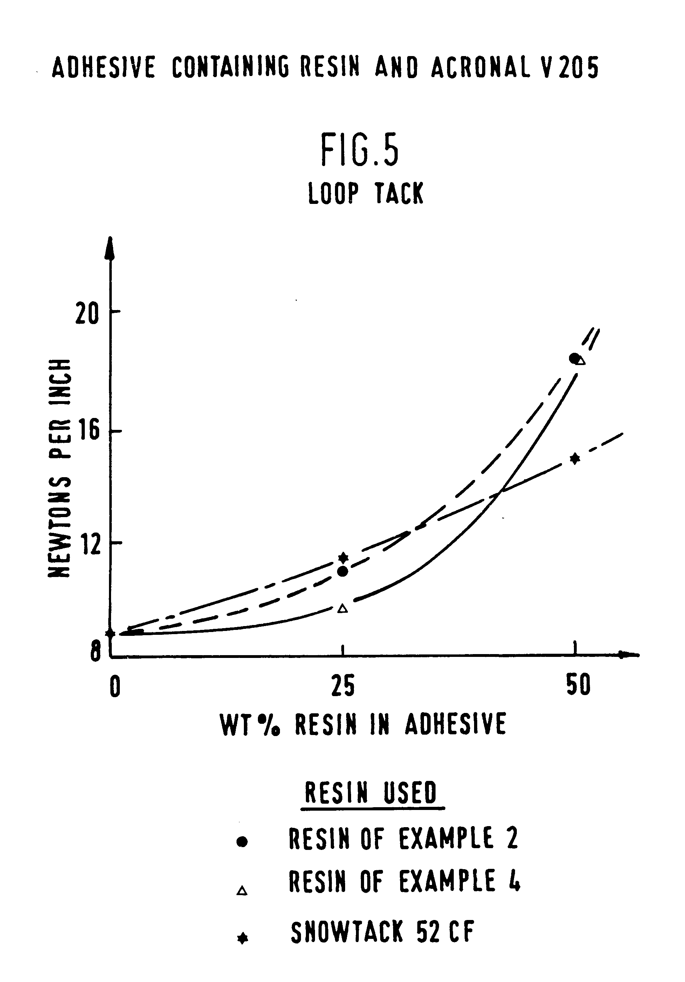

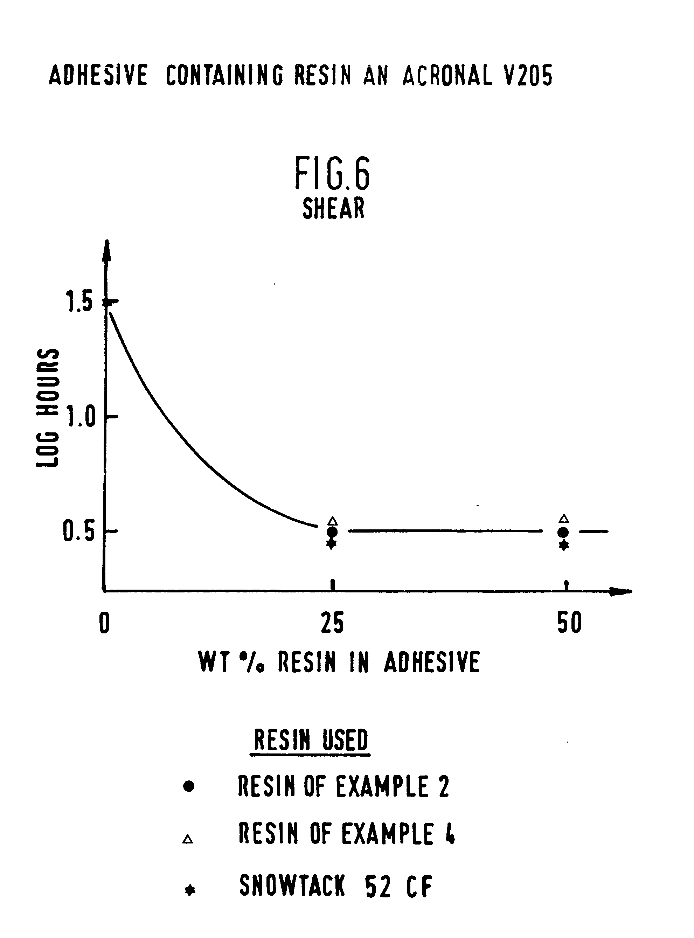

The peel strength, Loop Tack and Shear of Adhesives obtained from equal parts of an Snowtack 52 CF and emulsions of Acronal 85D and V205 D were measured at varying resin concentrations and the values obtained are set out in the graphs which are Figures 1 to 6 hereto in which the wt.% resin is on a dry basis in relation to the total weight of polymer and resin.

The following further resins were prepared using the feeds previously described.

| RESIN NUMBER | 8 | 9 | 10 |
|---|---|---|---|
| Feed composition wt.% | | | |
| Styrene | 17.7 | 8.9 | 11.7 |
| Feed | 42.1 | 53.7 | 52.1 |
| C5 stream | 40.2 | 37.4 | 36.2 |
| Resin yield % | 46 | 26.1 | 47.3 |
| Softening Point °C | 77 | 26 | 75 |
| Styrene in Resin (% wt.) | 35 | 9 | 22 |

All the resins were steam stripped.

The resins were evaluated as tackifiers for acrylic emulsion in mixtures containing 100 parts by weight acrylic and 20 parts by weight resin on a dry weight basis.

The results were as follows:

| Acrylic Emulsion | ACRONAL V205 | | | ACRONAL 85D | | |
|---|---|---|---|---|---|---|
| Emulsion of Resin | 8 | 9 | 10 | 8 | 9 | 10 |
| Peel (Newtons per 25.4 mm) | 20 | 17 | 20 | 9.9 | 8.8 | 8.8 |
| Loop Tack (Newtons per 25.4 mm) | 1.5 | 12 | 11 | 1.5 | 6.5 | 7.8 |
| Ball Tack (cm) | 4.5 | 11 | 4.5 | 10 | 18 | 14 |
| Shear (Hrs) | 1 | 0.8 | 0.5 | >300 | 83 | 200 |

## Claims

1. The use as a tackifier for an aqueous latex of acrylic polymers or copolymers of an aqueous emulsion of a resin having a softening point from 10°C to 120°C being a copolymer of a feed which is predominantly $C_5$ olefines and diolefins and one or more monovinyl aromatic compounds, said resin containing from 10 to 60 wt% of the monovinyl aromatic compounds.

2. The use according to Claim 1 in which the resin has a softening point of 10°C to 80°C and contains from 10 to 30 wt% of the monovinyl aromatic compound.

3. The use according to Claim 1 or Claim 2 in which the monovinyl aromatic compound is styrene.

4. The use according to any of the preceding claims in which the resin contains from 10 to 25 wt% of the monovinyl aromatic compound.

5. A pressure sensitive adhesive prepared by blending an aqueous latex of from 30 % to 85 % by weight on a dry basis of an acrylic polymer or copolymer and an aqueous emulsion of from 15 % to 70 % by weight on a dry basis of a resin having a softening point from 10°C to 120°C being a copolymer of a feed which is predominantly $C_5$ olefines and diolefines and one or more monovinyl aromatic compounds said resin containing from 10 to 60 wt % of the monovinyl aromatic compound.

6. A pressure sensitive adhesive according to Claim 5 in which the resin has a softening point from 10°C to 80°C and contains from 10 to 60 wt% of the monovinyl aromatic compound.

7. A pressure sensitive adhesive according to claim 5 or Claim 6 in which the resin contains from 10 to 25 wt% of the monovinyl aromatic compound.

8. A pressure sensitive adhesive according to any of claims 5 to 7 in which the monovinyl aromatic compound is styrene.

**Patentansprüche**

1. Verwendung als ein klebrigmachendes Mittel für einen wäßrigen Latex aus Acrylpolymeren oder -copolymeren von einer wäßrigen Emulsion eines Harzes, das einen Erweichungspunkt von 10°C bis 120°C hat und ein Copolymer eines Einsatzmaterials ist, das überwiegend $C_5$ Olefine und Diolefine und eine oder mehrere monovinylaromatische Verbindungen ist, wobei das Harz 10 bis 60 Gew.% der monovinylaromatischen Verbindungen enthält.

2. Verwendung nach Anspruch 1, wobei das Harz einen Erweichungspunkt von 10°C bis 80°C aufweist und 10 bis 30 Gew.% der monovinylaromatischen Verbindung enthält.

3. Verwendung nach Anspruch 1 oder Anspruch 2, wobei die monovinylaromatische Verbindung Styrol ist.

4. Verwendung nach einem der vorhergehenden Ansprüche, wobei das Harz 10 bis 25 Gew.% der monovinylaromatischen Verbindung enthält.

5. Druckempfindlicher Klebstoff, der durch Verschneiden eines wäßrigen Latex aus 30 bis 85 Gew.% (Trockenbasis) eines Acrylpolymers oder -copolymers mit einer wäßrigen Emulsion aus 15 bis 70 Gew.% (Trockenbasis) eines Harzes hergestellt wird, das einen Erweichungspunkt von 10 bis 120°C aufweist und ein Copolymer eines Einsatzmaterials ist, das überwiegend $C_5$ Olefine und Diolefine und eine oder mehrere monovinylaromatische Verbindungen ist, wobei das Harz 10 bis 60 Gew.% der monovinylaromatischen Verbindung enthält.

6. Druckempfindlicher Klebstoff nach Anspruch 5, wobei das Acrylpolymer oder -copolymer einen Erweichungspunkt von 10°C bis 80°C besitzt und 10 bis 60 Gew.% der monovinylaromatischen Verbindung enthält.

7. Druckempfindlicher Klebstoff nach Anspruch 5 oder 6, wobei das Harz 10 bis 25 Gew.% der monovinylaromatischen Verbindung enthält.

8. Druckempfindlicher Klebstoff nach einem der Ansprüche 5 bis 7, wobei die monovinylaromatische Verbindung Styrol ist.

**Revendications**

1. Utilisation, comme agent d'adhésivité pour un latex aqueux de polymères ou copolymères acryliques, d'une émulsion aqueuse d'une résine ayant un point de ramollissement de 10°C à 120°C, qui est un copolymère d'une charge qui consiste principalement en oléfines et dioléfines en $C_5$ et un ou plusieurs composés aromatiques monovinyliques, ladite résine contenant 10 à 60 % en poids des composés aromatiques monovinyliques.

**2.** Utilisation suivant la revendication 1, dans laquelle la résine possède un point de ramollissement de 10°C à 80°C et contient 10 à 30 % en poids du composé aromatique monovinylique.

**3.** Utilisation suivant la revendication 1 ou la revendication 2, dans laquelle le composé aromatique monovinylique est le styrène.

**4.** Utilisation suivant l'une quelconque des revendications précédentes, dans laquelle la résine contient 10 à 25 % en poids du composé aromatique monovinylique.

**5.** Adhésif sensible à la pression préparé par mélange d'un latex aqueux de 30 % à 85 % en poids, sur base sèche, d'un polymère ou copolymère acrylique et d'une émulsion aqueuse de 15 % à 70 % en poids, sur base sèche, d'une résine ayant un point de ramollissement de 10°C à 120°C qui est un copolymère d'une charge qui consiste principalement en oléfines et dioléfines en $C_5$ et un ou plusieurs composés aromatiques monovinyliques, ladite résine contenant 10 à 60 % en poids du composé aromatique monovinylique.

**6.** Adhésif sensible à la pression suivant la revendication 5, dans lequel la résine possède un point de ramollissement de 10°C à 80°C et contient 10 à 60 % en poids du composé aromatique monovinylique.

**7.** Adhésif sensible à la pression suivant la revendication 5 ou la revendication 6, dans lequel la résine contient 10 à 25 % en poids du composé aromatique monovinylique.

**8.** Adhésif sensible à la pression suivant l'une quelconque des revendications 5 à 7, dans lequel le composé aromatique monovinylique est le styrène.

ADHESIVE CONTAINING RESIN AND ACRONAL 85 D

FIG.1
PEEL STRENGTH

RESIN USED

● RESIN OF EXAMPLE 2

△ RESIN OF EXAMPLE 4

✦ SNOWTACK 52 CF

EP 0 196 844 B1

ADHESIVE CONTAINING RESIN AND ACRONAL 85 D

# FIG.2
## LOOP TACK

RESIN USED

●     RESIN OF EXAMPLE 2

△     RESIN OF EXAMPLE 4

✦     SNOWTACK 52 CF

10

ADHESIVE CONTAINING RESIN AND ACRONAL 85D

# FIG.3
## SHEAR

LOG HOURS

WT`% RESIN IN ADHESIVE

## RESIN USED

● RESIN OF EXAMPLE 2

△ RESIN OF EXAMPLE 4

★ SNOWTACK 52 CF

ADHESIVE CONTAINING RESIN AND ACRONAL V205

# FIG.4
## PEEL STRENGTH

RESIN USED

● RESIN OF EXAMPLE 2

△ RESIN OF EXAMPLE 4

✶ SNOWTACK 52 CF

ADHESIVE CONTAINING RESIN AND ACRONAL V 205

# FIG.5
## LOOP TACK

RESIN USED

●    RESIN OF EXAMPLE 2

△    RESIN OF EXAMPLE 4

✦    SNOWTACK 52 CF

# ADHESIVE CONTAINING RESIN AN ACRONAL V205

## FIG.6
### SHEAR

## RESIN USED

●    RESIN OF EXAMPLE 2

△    RESIN OF EXAMPLE 4

✦    SNOWTACK 52 CF